# EUROPEAN PATENT APPLICATION

(11) **EP 4 712 390 A1**
(43) Date of publication of application: **18.03.2026**
(21) Application number: 23936867.3
(22) Date of filing: 12.05.2023
(51) Int. Cl.: H04L 5/00, H04W 64/00

(54) **POSITIONING MEASUREMENT METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Hersina, Günter
(86) International application number: PCT/CN2023/094028
(87) International publication number: WO 2024/234174

(57) **Abstract**

Provided in the embodiments of the present disclosure are a positioning measurement method and apparatus, and a communication device and a storage medium. The method is executed by a user equipment (UE), and comprises: if it is determined that measurement trigger information, which is sent by a network device, is not received, performing, according to a positioning measurement configuration, a first positioning measurement associated with timing compensation, wherein the trigger information is used for triggering the UE to perform a second positioning measurement.

## Description

### FIELD

The present disclosure relates to the field of wireless communication technologies but is not limited to the field of wireless communication technologies, and in particular, to a positioning measurement method, an apparatus, a communication device, and a storage medium.

### BACKGROUND

The continuous emergence of new-generation Internet applications such as augmented reality (AR)/virtual reality (VR) and vehicle-to-vehicle communication has put forward higher requirements for wireless communication technologies, driving the continuous evolution of wireless communication technologies to meet the application requirements. Currently, cellular mobile communication technology is in the evolution stage of a new generation of technology. An important characteristic of the new generation of technology is to support flexible configuration of multiple service types. Since different service types have different requirements for wireless communication technologies, for example, the enhanced mobile broadband (eMBB) service type mainly requires large bandwidth and high speed; the ultra-reliable and low latency communications (URLLC) service type mainly requires high reliability and low latency; the massive machine type communication (mMTC) service type mainly requires a large number of connections. Therefore, the new-generation wireless communication system needs flexible and configurable design to support the transmission of multiple service types.

In the research of wireless communication technologies, satellite communication is considered an important aspect of the development of future wireless communication technologies. Satellite communication refers to communication where radio communication equipment on the ground uses satellites as relays. The satellite communication system consists of a satellite part and a ground part. The characteristics of satellite communication are: large communication range; as long as within the coverage of the radio waves emitted by the satellite, communication can be performed between any two points; not easily affected by terrestrial disasters (high reliability). As a supplement to current terrestrial cellular communication systems, satellite communication can have the following benefits:

Extend coverage: For areas where current cellular communication systems cannot cover or where coverage costs are high, such as oceans, deserts, remote mountainous areas, etc., communication problems can be solved through satellite communication.

Emergency communication: Under extreme conditions such as disasters like earthquakes where the infrastructure of cellular communication is unavailable, satellite communication can quickly establish communication connections.

Providing industry applications: For example, for latency-sensitive services with long-distance transmission, the service transmission latency can be reduced through satellite communication.

It is foreseeable that in future wireless communication systems, satellite communication systems and terrestrial cellular communication systems will gradually achieve deep integration, thereby truly realizing the intelligent connection of all things.

### SUMMARY

Embodiments of the present disclosure provide a positioning measurement method, apparatus, communication device, and storage medium.

According to a first aspect of the embodiments of the present disclosure, a positioning measurement method is provided, where the method is performed by a user equipment (UE), including:
determining that measurement trigger information sent by a network device is not received, and performing a first positioning measurement associated with a timing compensation according to a positioning measurement configuration, where the trigger information is used to trigger the UE to perform a second positioning measurement.

According to a second aspect of the embodiments of the present disclosure, a positioning measurement method is provided, where the method is performed by a network device, including:
sending a positioning measurement configuration to a user equipment (UE), where the positioning measurement configuration is used for the UE to determine that measurement trigger information sent by the network device is not received, and perform a first positioning measurement associated with a timing compensation, where the trigger information is used to trigger the UE to perform a second positioning measurement.

According to a third aspect of the embodiments of the present disclosure, a positioning measurement apparatus is provided, where the apparatus is arranged in a user equipment (UE), including:
a processing module, configured to determine that measurement trigger information sent by a network device is not received, and perform a first positioning measurement associated with a timing compensation according to a positioning measurement configuration, where the trigger information is used to trigger the UE to perform a second positioning measurement.

According to a fourth aspect of the embodiments of the present disclosure, a positioning measurement apparatus is provided, where the apparatus is arranged in a network device, including:
a transceiver module, configured to send a positioning measurement configuration to a user equipment (UE), where the positioning measurement configuration is used for the UE to determine that measurement trigger information sent by the network device is not received, and perform a first positioning measurement associated with a timing compensation, where the trigger information is used to trigger the UE to perform a second positioning measurement.

According to a fifth aspect of the embodiments of the present disclosure, a communication system is provided, including: a user equipment (UE) and a network device,
the user equipment (UE) is configured to perform the positioning measurement method according to the first aspect;
the network device is configured to perform the positioning measurement method according to the second aspect.

According to a sixth aspect of the embodiments of the present disclosure, a communication device is provided, including a processor, a transceiver, a memory, and an executable program stored in the memory and executable by the processor, where the processor, when executing the executable program, performs the positioning measurement method according to the first aspect or the second aspect.

According to a seventh aspect of the embodiments of the present disclosure, a computer storage medium is provided, where the computer storage medium stores an executable program; when the executable program is executed by a processor, the positioning measurement method according to the first aspect or the second aspect is implemented.

The positioning measurement method, apparatus, communication device, and storage medium provided by the embodiments of the present disclosure. The UE determines that measurement trigger information sent by a network device is not received, and performs a first positioning measurement associated with a timing compensation according to a positioning measurement configuration, where the trigger information is used to trigger the UE to perform a second positioning measurement. In this way, the UE is no longer limited to requiring measurement trigger information to perform positioning measurement, and can actively perform positioning measurement based on the positioning measurement configuration when the measurement trigger information is not received. On one hand, the flexibility of positioning measurement is improved. On the other hand, when the measurement trigger information is not received, the UE can actively determine position information through the positioning measurement configuration, thereby determining an effective timing compensation, improving communication reliability, effectively avoiding unnecessary service interruption of the UE, and reducing power consumption caused by service interruption and retries.

Regarding the technical solutions provided by the embodiments of the present disclosure, it should be understood that the above general description and the following detailed description are exemplary and explanatory only, and cannot limit the embodiments of the present disclosure.

### BRIEF DESCRIPTION OF THE DRAWINGS

The drawings herein are incorporated into and constitute a part of the specification, illustrate embodiments consistent with the present invention, and together with the specification, serve to explain the principles of the embodiments of the present invention.
FIG. 1 is a schematic structural diagram of a wireless communication system according to an embodiment;
FIG. 2 is a schematic diagram of a delay compensation according to an embodiment;
FIG. 3 is a schematic diagram of a delay compensation according to an embodiment;
FIG. 4 is a schematic flowchart of a positioning measurement according to an embodiment;
FIG. 5 is a schematic flowchart of a positioning measurement according to an embodiment;
FIG. 6 is a schematic flowchart of a positioning measurement according to an embodiment;
FIG. 7 is a schematic flowchart of a positioning measurement according to an embodiment;
FIG. 8 is a schematic timing diagram of a positioning measurement according to an embodiment;
FIG. 9 is a schematic timing diagram of a positioning measurement according to an embodiment;
FIG. 10 is a schematic flowchart of a positioning measurement according to an embodiment;
FIG. 11 is a schematic flowchart of a positioning measurement according to an embodiment;
FIG. 12 is a schematic structural diagram of a positioning measurement apparatus according to an embodiment;
FIG. 13 is a schematic structural diagram of a positioning measurement apparatus according to an embodiment;
FIG. 14 is a schematic structural diagram of a UE according to an embodiment; and
FIG. 15 is a schematic structural diagram of a communication device according to an embodiment.

### DETAILED DESCRIPTION

Exemplary embodiments will be described in detail here, with examples thereof shown in the drawings. When the following description refers to the drawings, unless otherwise indicated, the same numbers in different drawings represent the same or similar elements. The implementations described in the following embodiments do not represent all implementations consistent with the embodiments of the present invention. Rather, they are merely examples of apparatuses and methods consistent with some aspects of the embodiments of the present invention.

The terms used in the embodiments of the present disclosure are for the purpose of describing specific embodiments only, and are not intended to limit the embodiments of the present disclosure. The singular forms "a", "the", and "this" used in the present disclosure are also intended to include plural forms, unless the context clearly indicates otherwise. It should also be understood that the term "and/or" as used herein refers to and includes any and all possible combinations of one or more of the associated listed items.

It should be understood that although the terms first, second, third, etc. may be used in the embodiments of the present disclosure to describe various information, such information should not be limited by these terms. These terms are only used to distinguish information of the same type from each other. For example, without departing from the scope of the embodiments of the present disclosure, first information may also be referred to as second information, and similarly, second information may also be referred to as first information. Depending on the context, the word "if' as used herein may be interpreted as "when" or "upon" or "in response to determining".

In some embodiments, "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and other terms may be used interchangeably.

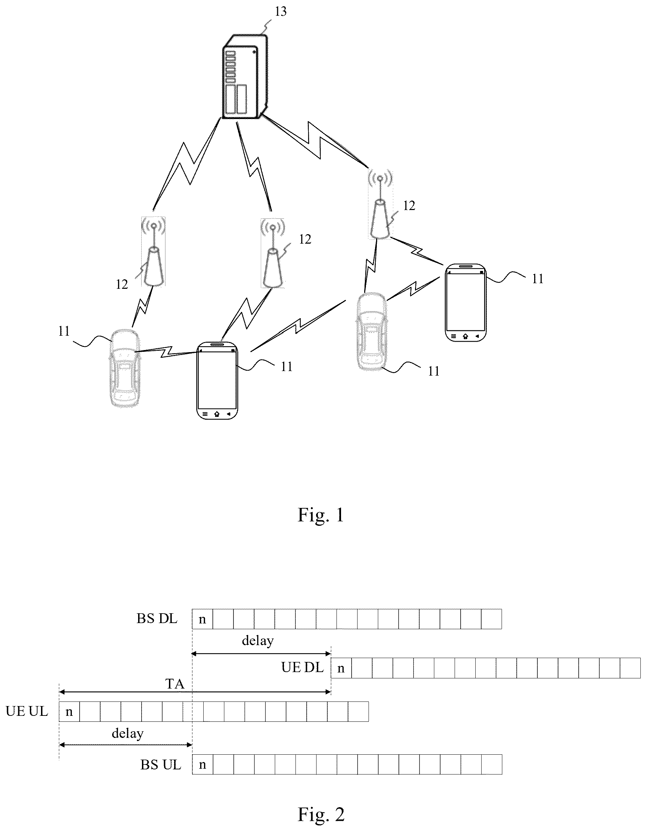

Please refer to FIG. 1, which shows a schematic structural diagram of a wireless communication system according to an embodiment of the present disclosure. As shown in FIG. 1, the wireless communication system is a communication system based on cellular mobile communication technology, and the wireless communication system may include: several UEs 11 and several network devices 12.

The wireless communication system may be a fourth-generation mobile communication technology (4G) system, also known as a Long Term Evolution (LTE) system; or, the wireless communication system may be a 5G system, also known as a new radio (NR) system or 5G NR system. Alternatively, the wireless communication system may also be a next-generation system after the 5G system. The access network in the 5G system may be referred to as NG-RAN (New Generation-Radio Access Network) or an MTC system.

The UE 11 may refer to a device that provides voice and/or data connectivity to a user. The UE 11 may communicate with one or more core networks via a radio access network (RAN). The UE 11 may be an Internet of Things UE, such as a sensor device, a mobile phone (or referred to as a "cellular" phone), and a computer with an Internet of Things UE, for example, it may be a fixed, portable, pocket-sized, handheld, computer-built-in, or vehicle-mounted device. For example, a station (STA), subscriber unit, subscriber station, mobile station, mobile, remote station, access point, remote terminal, access terminal, user terminal, user agent, user device, or user equipment (UE). Or, the UE 11 may also be a device of an unmanned aerial vehicle. Or, the UE 11 may also be an in-vehicle device, for example, it may be an on-board computer with wireless communication functions, or a wireless communication device connected to an on-board computer. Or, the UE 11 may also be a roadside device, for example, it may be a street light, traffic light, or other roadside device with wireless communication functions.

The network device 12 may include an access network device. Optionally, the network device 12 may also include a core network device. The access network device may be an evolved Node B (eNB) used in a 4G system. Or, it may also be an access device (gNB) using a centralized distributed architecture in a 5G system. When the access network device adopts a centralized distributed architecture, it usually includes a central unit (CU) and at least two distributed units (DU). The central unit is provided with a protocol stack of the Packet Data Convergence Protocol (PDCP) layer, Radio Link Control (RLC) layer, and Media Access Control (MAC) layer; the distributed unit is provided with a protocol stack of the Physical (PHY) layer. The specific implementation of the access network device is not limited in the embodiments of the present disclosure.

A wireless connection may be established between the network device 12 and the UE 11 via a wireless air interface. In different implementations, the wireless air interface is a wireless air interface based on the fourth-generation mobile communication network technology (4G) standard; or, the wireless air interface is a wireless air interface based on the fifth-generation mobile communication network technology (5G) standard, for example, the wireless air interface is a new radio; or, the wireless air interface may also be a wireless air interface based on a next-generation mobile communication network technology standard after 5G.

In some examples, the access device 12 may be an access device of a terrestrial network (TN), or may be an NTN device having all or part of the functions of an access network.

The NTN device may be, for example, a satellite deployed in an NTN, a high altitude platform system (HAPS), or an air-to-ground (ATG) device.

For example, the access device 12 may be located in a communication system integrated with a satellite communication system and capable of providing connection services for satellites, and may connect the satellites to the core network. For example, the access device 12 may be an access device with satellite gateway functions in the communication system, such as a gateway device, a ground station device, a non-terrestrial network gateway/satellite gateway (NTN-Gateway), etc.

For example, the above wireless communication system may further include a core network device 13. Several access devices 12 are connected to the core network device 13 respectively. The core network device 13 may be an Access and Mobility Management Function (AMF), User Plane Function (UPF), Policy Control Function (PCF), etc. The implementation form of the core network device 13 is not limited in the embodiments of the present disclosure. In one example, the core network device 13 is a Sensing Function (SF) network element, which is a functional network element that provides sensing services.

The AMF, UPF, PCF, etc. in the embodiments of the present disclosure may be implemented by one physical device, or may be implemented by multiple physical devices. It can be understood that the AMF, UPF, PCF, etc. in the embodiments of the present disclosure may be a logical functional module within a physical device, or may be a logical functional module composed of multiple physical devices, which is not limited in the embodiments of the present disclosure.

It should be noted that the network architecture shown in FIG. 1 is only an example applicable to the embodiments of the present disclosure and does not constitute a limitation on the applicable scope of the embodiments of the present disclosure.

To facilitate understanding by those skilled in the art, the embodiments of the present disclosure provide multiple implementation examples to clearly illustrate the technical solutions of the embodiments of the present disclosure. Of course, those skilled in the art can understand that the multiple embodiments provided by the embodiments of the present disclosure can be executed separately, or can be executed in combination with other embodiments in the embodiments of the present disclosure, or can be executed in combination with some methods in other related technologies; the embodiments of the present disclosure do not impose limitations on this.

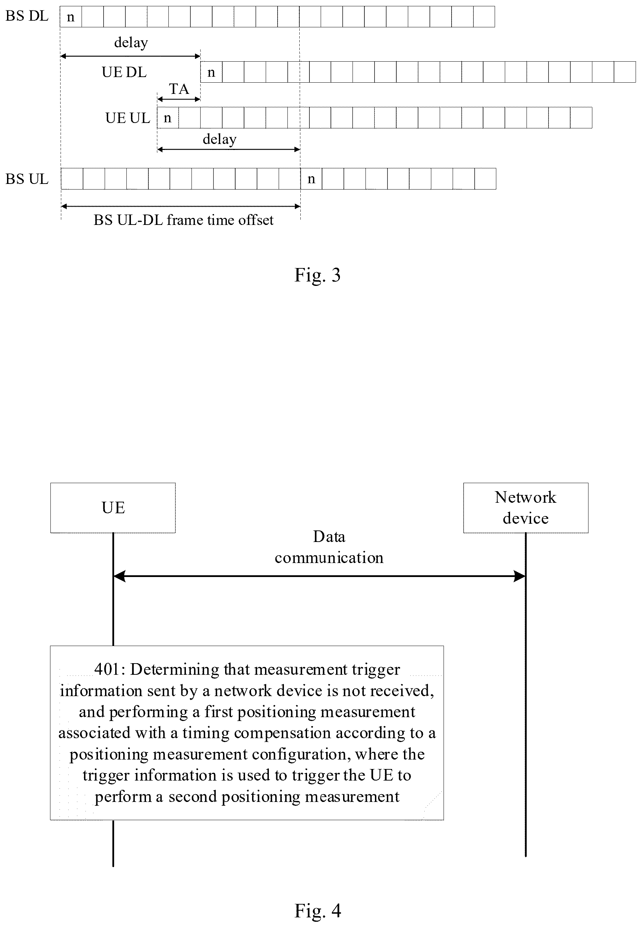

In a satellite communication system, due to the large propagation distance, there is a large deviation in uplink and downlink timing. As shown in FIG. 2 and FIG. 3, the terminal needs to maintain uplink synchronization based on GNSS measurements and some auxiliary information.

In the scenario of satellite communication, due to the long signal transmission distance between the transmitter and the receiver, data transmission has a large delay. For transmissions with an uplink-downlink relationship, a delay parameter Koffset can be introduced to compensate for the transmission delay. To determine the delay parameter, the terminal needs to report position information.

Koffset can be applied in various operations, such as: PUSCH transmission scheduled by DCI; transmission of HARQ feedback information; and transmission of MAC CE, etc.

The terminal needs to obtain position information to determine the timing compensation (such as the delay parameter) for uplink transmission. The terminal can determine its own position information through a GNSS measurement module.

After the terminal obtains the GNSS measurement result, the reliable time of GNSS can be reported to the base station through the GNSS validity duration. After the GNSS validity duration of the terminal expires, the terminal can enter the IDLE state.

The terminal can perform GNSS measurement based on the trigger of the base station to ensure that the terminal always has valid GNSS position information.

When the terminal does not receive the trigger command sent by the base station, or when the base station does not send a trigger command, how the terminal performs GNSS measurement to ensure the reliability of satellite communication is a problem that needs to be solved urgently.

As shown in FIG. 4, an embodiment of the present disclosure provides a positioning measurement method, where the method is performed by a user equipment (UE), including:
Step 401: Determining that measurement trigger information sent by a network device is not received, and performing a first positioning measurement associated with a timing compensation according to a positioning measurement configuration, where the trigger information is used to trigger the UE to perform a second positioning measurement.

The network device includes, but is not limited to, an access network device such as a base station.

The UE may be a terminal such as a mobile phone or an Internet of Things device in a non-terrestrial network.

In non-terrestrial network communication, an access network device (such as a satellite, base station) can send measurement trigger information to the UE to trigger the UE to perform positioning measurement, thereby determining the position information of the UE. The position information of the UE is used for the access network device and/or the UE to determine a timing compensation to compensate for the delay in communication between the satellite and the UE.

The first positioning measurement may be a positioning measurement actively performed by the UE based on the positioning measurement configuration. The first positioning measurement is not triggered by the measurement trigger information.

The second positioning measurement may be a positioning measurement performed by the UE triggered by the measurement trigger information.

The first positioning measurement being associated with a timing compensation may mean that the position information of the UE obtained by performing the first positioning measurement can be used to determine the timing compensation (such as Koffset) in satellite communication. That is, the UE performs the first positioning measurement to determine the timing compensation.

The position information of the UE obtained by performing the second positioning measurement can also be used to determine the timing compensation (such as Koffset) in satellite communication.

In an embodiment, the positioning measurement may include: GNSS measurement. The positioning measurement configuration may include a configuration for GNSS measurement.

The position information of the UE obtained by the UE through one positioning measurement has a positioning validity period, that is, the timing compensation obtained based on the position information of the UE has a positioning validity period. After the positioning validity period expires, the position information of the UE becomes invalid, and the UE needs to perform another positioning measurement to determine a valid timing compensation.

In a non-terrestrial network scenario, due to the influence of the external environment, the working state of the UE, etc., the measurement trigger information sent by the base station may not be received by the UE. If the UE does not perform positioning measurement because it does not receive the measurement trigger information, then after the current timing compensation's positioning validity period expires, since the timing compensation cannot be updated, communication failure may occur.

The method provided in this embodiment, if the UE does not receive the measurement trigger information, the UE can actively perform the first positioning measurement based on the positioning measurement configuration, thereby updating the position information of the UE, and thus determining a valid timing compensation.

In an embodiment, the positioning measurement configuration may be pre-set, or may be pre-sent by the network device to the UE, or may be determined by the UE.

In this way, the UE is no longer limited to requiring measurement trigger information to perform positioning measurement, and can actively perform positioning measurement based on the positioning measurement configuration when the measurement trigger information is not received. On one hand, the flexibility of positioning measurement is improved. On the other hand, when the measurement trigger information is not received, the UE can actively determine position information through the positioning measurement configuration, thereby determining a valid timing compensation, improving communication reliability, effectively avoiding unnecessary service interruption of the UE, and reducing power consumption caused by service interruption and retries.

In an embodiment, the determining that measurement trigger information sent by a network device is not received, and performing a first positioning measurement associated with a timing compensation according to a positioning measurement configuration, includes:
in response to not receiving the measurement trigger information sent by the network device within a predetermined duration before an end time of a current positioning validity period, performing the first positioning measurement associated with the timing compensation according to the positioning measurement configuration.

The UE may determine whether to perform the first positioning measurement associated with the timing compensation according to the positioning measurement configuration based on the end time of the current positioning validity period.

In an embodiment, the predetermined duration may be determined based on the time requirement for the UE to update the timing compensation. The UE determining the timing compensation based on the first positioning measurement needs to meet the time requirement for the UE to update the timing compensation. For example, the UE needs to determine the timing compensation based on the first positioning measurement before the positioning validity period of the timing compensation expires, thereby improving communication reliability.

Therefore, if the UE does not receive the measurement trigger information within the predetermined duration before the end time of the current positioning validity period, even if it receives the measurement trigger information again, the determined timing compensation is likely not to meet the time requirement for the UE to update the timing compensation. Therefore, if the measurement trigger information is not received within the predetermined duration before the end time of the current positioning validity period, the UE can actively perform the first positioning measurement based on the positioning configuration, so that the obtained timing compensation can meet the time requirement for the UE to update the timing compensation.

In an embodiment, the positioning measurement configuration includes at least one of:
a measurement period of the first positioning measurement;
a time-domain offset value for the first positioning measurement within each measurement period;
a measurement duration of the first positioning measurement; or
a time-domain start position of the first positioning measurement.

The first positioning measurement may be performed periodically, and the positioning measurement configuration may include a period for performing the first positioning measurement.

The time-domain offset value may be used for the UE to determine the time-domain start position of the first positioning measurement within each period. The UE may determine the time-domain start position of the first positioning measurement within a period based on a start time and the time-domain offset value of the period.

The UE needs a certain duration from initiating the first positioning measurement to determining the position information, which may be referred to as a position fix time. The measurement duration configured in the positioning measurement configuration is greater than or equal to the position fix time.

In an embodiment, the position fix time includes: a GNSS position fix time.

The time-domain start position of the first positioning measurement may be a time-domain start position of periodic first positioning measurements, or a time-domain start position of aperiodic first positioning measurements.

In an embodiment, the UE may determine the time-domain start position of the first positioning measurement based on a predetermined rule, for example, determine the time-domain start position of the first positioning measurement based on the end position of the current positioning validity period. Alternatively, the UE may determine the start position of the first positioning measurement based on a predefined time after the end position of the current positioning validity period.

In an embodiment, the time-domain start position of the first positioning measurement may be pre-configured by the network device to the terminal.

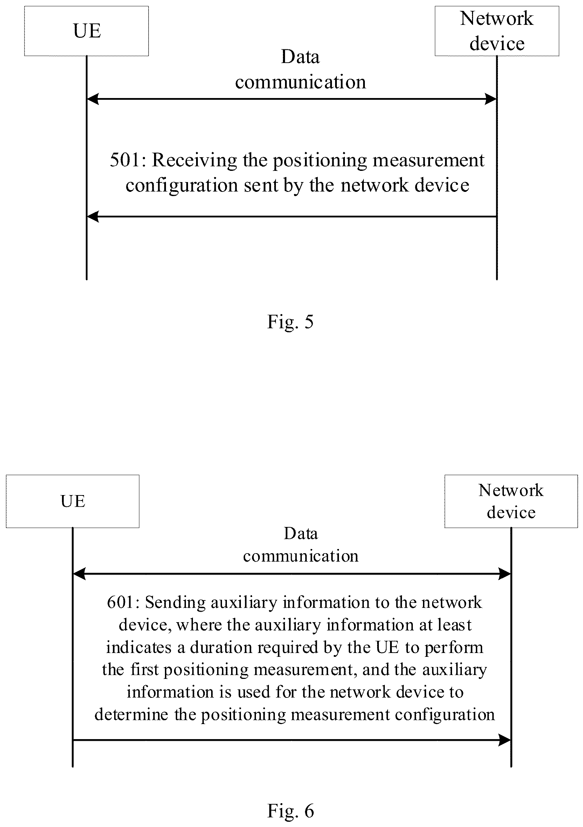

As shown in FIG. 5, an embodiment of the present disclosure provides a positioning measurement method, where the method is performed by a user equipment (UE), including:
Step 501: Receiving the positioning measurement configuration sent by the network device.

The positioning measurement configuration may be pre-sent by the network device to the UE. When the UE does not receive the measurement trigger information within a predetermined duration before the end time of the current positioning validity period, the UE can actively perform the first positioning measurement based on the positioning configuration, so that the obtained timing compensation can meet the time requirement for the UE to update the timing compensation.

As shown in FIG. 6, an embodiment of the present disclosure provides a positioning measurement method, where the method is performed by a user equipment (UE), including:
Step 601: Sending auxiliary information to the network device, where the auxiliary information at least indicates a duration required by the UE to perform the first positioning measurement, where the duration required by the UE to perform the first positioning measurement is used for the network device to determine the positioning measurement configuration.

Here, the UE may pre-send auxiliary information to the network device for the network device to determine the positioning measurement configuration.

When the UE performs positioning measurement, it requires a certain duration from initiating the measurement to determining the position information. The positioning measurement configuration configured by the network device needs to meet the duration required by the UE to perform the first positioning measurement.

In an embodiment, the positioning measurement configuration needing to meet the duration required by the UE to perform the first positioning measurement may include, but is not limited to, at least one of the following:
the duration of the measurement period in the positioning measurement configuration needs to be greater than or equal to the duration required by the UE to perform the first positioning measurement;
the measurement duration of the first positioning measurement needs to be greater than or equal to the duration required by the UE to perform the first positioning measurement;
the sum of the time-domain offset value for the first positioning measurement within each measurement period and the duration required by the UE to perform the first positioning measurement is less than or equal to the duration of the measurement period.

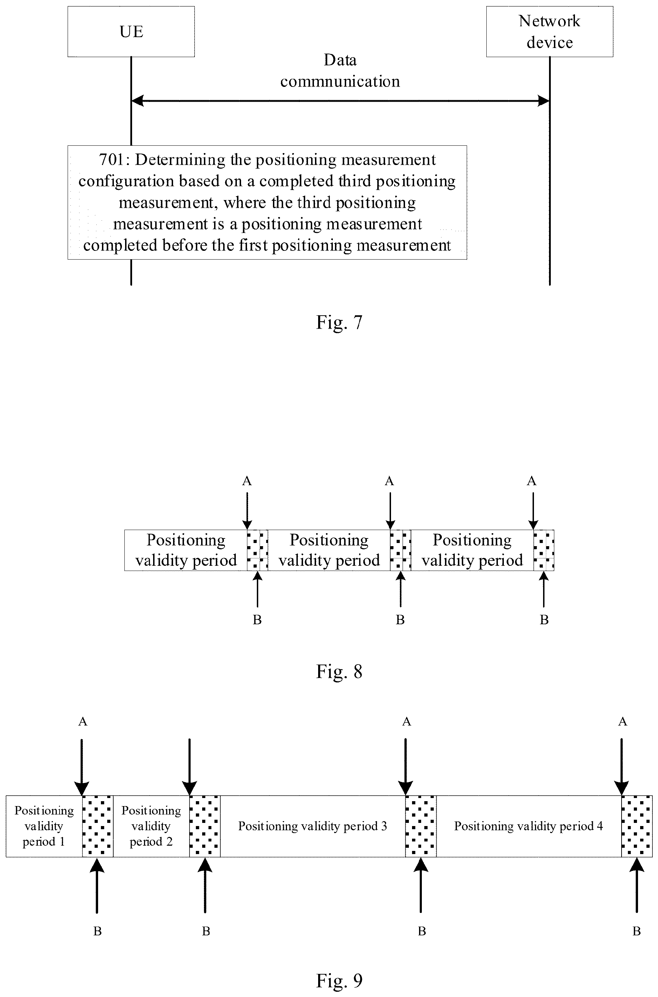

As shown in FIG. 7, an embodiment of the present disclosure provides a positioning measurement method, where the method is performed by a user equipment (UE), including:
Step 701: Determining the positioning measurement configuration based on a completed third positioning measurement, where the third positioning measurement is a positioning measurement completed before the first positioning measurement.

In an embodiment, the positioning measurement configuration may be pre-sent by the network device to the UE.

In an embodiment, the positioning measurement configuration may be determined by the UE based on the completed third positioning measurement.

In an embodiment, a first part of the positioning measurement configuration may be determined by the UE based on the completed third positioning measurement, and a second part of the positioning measurement configuration may be pre-sent by the network device to the UE.

For example, the measurement period in the positioning measurement configuration may be pre-sent by the network device to the UE, and the measurement duration in the positioning measurement configuration may be determined by the UE based on the completed third positioning measurement.

In an embodiment, the third positioning measurement may be a positioning measurement corresponding to the current positioning validity period.

In an embodiment, the third positioning measurement may be the last positioning measurement performed before the current first positioning measurement.

The UE may use the measurement configuration of the third positioning measurement as the configuration for the first positioning measurement.

For example, the UE may determine the time-domain offset value of the third positioning measurement as the time-domain offset value for the first positioning measurement.

In this way, by determining the positioning measurement configuration for the first positioning measurement based at least on the third positioning measurement, it is achieved that the UE can actively perform positioning measurement based on the positioning measurement configuration when the measurement trigger information is not received. On one hand, the flexibility of positioning measurement is improved. On the other hand, when the measurement trigger information is not received, the UE can actively determine position information through the positioning measurement configuration, thereby determining the timing compensation, improving communication reliability, effectively avoiding unnecessary service interruption of the UE, and reducing power consumption caused by service interruption and retries.

The first part of the positioning measurement configuration may include at least one of: the measurement period of the first positioning measurement; the time-domain offset value for the first positioning measurement within each measurement period; the measurement duration of the first positioning measurement; or the time-domain start position of the first positioning measurement.

The second part of the positioning measurement configuration may also include at least one of: the measurement period of the first positioning measurement; the time-domain offset value for the first positioning measurement within each measurement period; the measurement duration of the first positioning measurement; or the time-domain start position of the first positioning measurement.

The first part and the second part of the positioning measurement configuration may not overlap, or may overlap.

In an embodiment, the first part and the second part of the positioning measurement configuration may overlap, and the UE may select to use the first part or the second part according to their respective priorities.

In an embodiment, the determining the positioning measurement configuration based on the completed third positioning measurement, includes:
determining an actual measurement duration of completing the third positioning measurement as the measurement duration of the first positioning measurement.

In an embodiment, the UE may determine the measurement duration of the first positioning measurement based on the actual measurement duration of the third positioning measurement. The actual measurement duration of the third positioning measurement may be the duration actually used by the UE to perform the third positioning measurement.

The UE may determine the actual measurement duration of the third positioning measurement as the measurement duration of the first positioning measurement.

The actual measurement duration of the third positioning measurement may be referred to as the position fix time of the third positioning measurement, such as the GNSS position fix time.

For example, the UE may perform the first positioning measurement based on the positioning measurement configuration configured by the network device. If the network device has not configured the positioning measurement configuration, or if the network device has not configured the measurement duration of the first positioning measurement in the measurement configuration, the UE may determine the measurement duration of the first positioning measurement as the position fix time of the most recent positioning measurement (i.e., the third positioning measurement), such as the GNSS position fix time of the third positioning measurement.

In an embodiment, the determining the positioning measurement configuration based on the completed third positioning measurement, includes:
determining the time-domain start position of the first positioning measurement according to a positioning validity period associated with the third positioning measurement.

After the positioning validity period associated with the third positioning measurement expires, the position information of the UE obtained by performing the third positioning measurement becomes invalid, that is, the current timing compensation becomes invalid. Therefore, the UE may determine the time-domain start position of the first positioning measurement based on the positioning validity period associated with the third positioning measurement, to meet the time requirement for the UE to update the timing compensation.

For example, if the UE requires that the timing compensation needs to be continuous, then before the positioning validity period associated with the third positioning measurement expires, the UE needs to obtain an updated timing compensation after the expiration of the positioning validity period associated with the third positioning measurement. Therefore, the UE may perform the first positioning measurement before the positioning validity period associated with the third positioning measurement expires, that is, the time-domain start position of the first positioning measurement may be before the expiration of the positioning validity period associated with the third positioning measurement.

Determining the time-domain start position of the first positioning measurement based on the positioning validity period associated with the third positioning measurement can meet the requirement for updating the position information of the UE and meet the time requirement for updating the timing compensation.

In an embodiment, if the network device has not configured the positioning measurement configuration, or if the network device has not configured the time-domain start position of the first positioning measurement in the measurement configuration, the UE may determine the time-domain start position of the first positioning measurement according to the positioning validity period associated with the third positioning measurement.

In an embodiment, the determining the time-domain start position of the first positioning measurement according to the positioning validity period associated with the third positioning measurement, includes:
determining an end time of the positioning validity period associated with the third positioning measurement as the time-domain start position of the first positioning measurement.

In an embodiment, if the network device has not configured the positioning measurement configuration, or if the network device has not configured the time-domain start position of the first positioning measurement in the measurement configuration, the UE may determine the end time of the positioning validity period associated with the third positioning measurement as the time-domain start position of the first positioning measurement.

As shown in FIG. 8, the time-domain start position of the first positioning measurement is the expiration position of the GNSS validity duration of the third positioning measurement. In FIG. 8, arrow A indicates the expiration time of the GNSS validity duration, and arrow B indicates the performed first positioning measurement.

In an embodiment, the determining the positioning measurement configuration based on the completed third positioning measurement, includes:
determining the measurement period of the first positioning measurement according to a positioning validity period associated with the third positioning measurement.

In an embodiment, the period duration of the measurement period of the first positioning measurement is positively correlated with the duration of the positioning validity period associated with the third positioning measurement.

The longer the duration of the positioning validity period associated with the third positioning measurement, the lower the frequency of performing the first positioning measurement, that is, the longer the period duration of the measurement period of the first positioning measurement.

In an embodiment, the measurement period of the first positioning measurement changes according to the positioning validity period associated with the third positioning measurement.

As shown in FIG. 9, the measurement period of the first positioning measurement may change based on the GNSS validity duration of the third positioning measurement. When the GNSS validity duration of the UE changes, the terminal determines the measurement period for performing the first positioning measurement based on the latest GNSS validity duration. In FIG. 9, arrow A indicates the expiration time of the GNSS validity duration, and arrow B indicates the performed first positioning measurement.

In an embodiment, if the network device has not configured the positioning measurement configuration, or if the network device has not configured the measurement period of the first positioning measurement in the measurement configuration, the UE may determine the measurement period of the first positioning measurement according to the positioning validity period associated with the third positioning measurement.

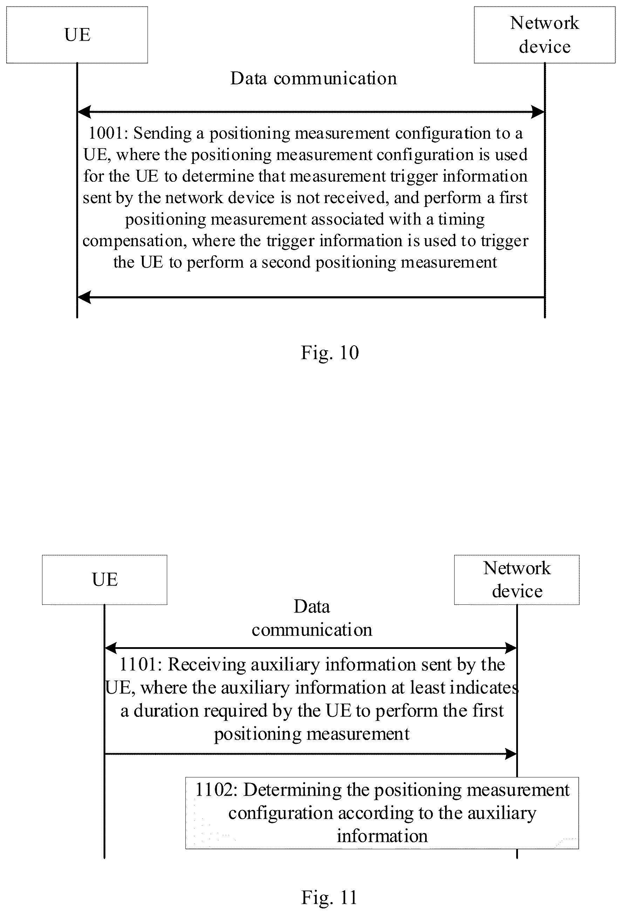

As shown in FIG. 10, an embodiment of the present disclosure provides a positioning measurement method, where the method is performed by a network device, including:
Step 1001: Sending a positioning measurement configuration to a UE, where the positioning measurement configuration is used for the UE to determine that measurement trigger information sent by the network device is not received, and perform a first positioning measurement associated with a timing compensation, where the trigger information is used to trigger the UE to perform a second positioning measurement.

The network device includes, but is not limited to, an access network device such as a base station.

The UE may be a terminal such as a mobile phone or an Internet of Things device in a non-terrestrial network.

In non-terrestrial network communication, an access network device (such as a satellite, base station) can send measurement trigger information to the UE to trigger the UE to perform positioning measurement, thereby determining the position information of the UE. The position information of the UE is used for the access network device and/or the UE to determine a timing compensation to compensate for the delay in communication between the satellite and the UE.

The first positioning measurement may be a positioning measurement actively performed by the UE based on the positioning measurement configuration. The first positioning measurement is not triggered by the measurement trigger information.

The second positioning measurement may be a positioning measurement performed by the UE triggered by the measurement trigger information.

The first positioning measurement being associated with a timing compensation may mean that the position information of the UE obtained by performing the first positioning measurement can be used to determine the timing compensation (such as Koffset) in satellite communication. That is, the UE performs the first positioning measurement to determine the timing compensation.

The position information of the UE obtained by performing the second positioning measurement can also be used to determine the timing compensation (such as Koffset) in satellite communication. In an embodiment, the positioning measurement may include: GNSS measurement. The positioning measurement configuration may include a configuration for GNSS measurement.

The position information of the UE obtained by the UE through one positioning measurement has a positioning validity period, that is, the timing compensation obtained based on the position information of the UE has a positioning validity period. After the positioning validity period expires, the position information of the UE becomes invalid, and the UE needs to perform another positioning measurement to determine a valid timing compensation.

In a non-terrestrial network scenario, due to the influence of the external environment, the working state of the UE, etc., the measurement trigger information sent by the base station may not be received by the UE. If the UE does not perform positioning measurement because it does not receive the measurement trigger information, then after the current timing compensation's positioning validity period expires, since the timing compensation cannot be updated, communication failure may occur.

According to the method provided in this embodiment, if the UE does not receive the measurement trigger information, the UE can actively perform the first positioning measurement based on the positioning measurement configuration, thereby updating the position information of the UE, and thus determining a valid timing compensation.

The positioning measurement configuration may be pre-sent by the network device to the UE. When the UE does not receive the measurement trigger information within a predetermined duration before the end time of the current positioning validity period, the UE can actively perform the first positioning measurement based on the positioning configuration, so that the obtained timing compensation can meet the time requirement for the UE to update the timing compensation.

In this way, the UE is no longer limited to requiring measurement trigger information to perform positioning measurement, and can actively perform positioning measurement based on the positioning measurement configuration when the measurement trigger information is not received. On one hand, the flexibility of positioning measurement is improved. On the other hand, when the measurement trigger information is not received, the UE can actively determine position information through the positioning measurement configuration, thereby determining a valid timing compensation, improving communication reliability, effectively avoiding unnecessary service interruption of the UE, and reducing power consumption caused by service interruption and retries.

In an embodiment, the positioning measurement configuration is used for the UE to, in response to not receiving the measurement trigger information within a predetermined duration before an end time of a current positioning validity period, perform the first positioning measurement associated with the timing compensation.

The UE may determine whether to perform the first positioning measurement associated with the timing compensation according to the positioning measurement configuration based on the end time of the current positioning validity period.

In an embodiment, the predetermined duration may be determined based on the time requirement for the UE to update the timing compensation. The UE determining the timing compensation based on the first positioning measurement needs to meet the time requirement for the UE to update the timing compensation. For example, the UE needs to determine the timing compensation based on the first positioning measurement before the positioning validity period of the timing compensation expires, thereby improving communication reliability.

Therefore, if the UE does not receive the measurement trigger information within the predetermined duration before the end time of the current positioning validity period, even if it receives the measurement trigger information again, the determined timing compensation is likely not to meet the time requirement for the UE to update the timing compensation. Therefore, if the measurement trigger information is not received within the predetermined duration before the end time of the current positioning validity period, the UE can actively perform the first positioning measurement based on the positioning configuration, so that the obtained timing compensation can meet the time requirement for the UE to update the timing compensation.

In an embodiment, the positioning measurement configuration includes at least one of:
a measurement period of the first positioning measurement;
a time-domain offset value for the first positioning measurement within each measurement period;
a measurement duration of the first positioning measurement; or
a time-domain start position of the first positioning measurement.

The first positioning measurement may be performed periodically, and the positioning measurement configuration may include a period for performing the first positioning measurement.

The time-domain offset value may be used for the UE to determine the time-domain start position of the first positioning measurement within each period. The UE may determine the time-domain start position of the first positioning measurement within a period based on a start time of the period and the time-domain offset value.

The UE needs a certain duration from initiating the first positioning measurement to determining the position information, which may be referred to as a position fix time. The measurement duration configured in the positioning measurement configuration is greater than or equal to the position fix time.

In an embodiment, the position fix time includes: a GNSS position fix time.

The time-domain start position of the first positioning measurement may be a time-domain start position of periodic first positioning measurements, or a time-domain start position of aperiodic first positioning measurements.

In an embodiment, the UE may determine the time-domain start position of the first positioning measurement based on a predetermined rule, for example, determine the time-domain start position of the first positioning measurement based on the end position of the current positioning validity period. Or the UE may determine the start position of the first positioning measurement based on a predefined time after the end position of the current positioning validity period.

In an embodiment, the time-domain start position of the first positioning measurement may be pre-configured by the network device to the UE.

As shown in FIG. 11, an embodiment of the present disclosure provides a positioning measurement method, where the method is performed by a network device, including:
Step 1101: Receiving auxiliary information sent by the UE, where the auxiliary information at least indicates a duration required by the UE to perform the first positioning measurement;
Step 1102: Determining the positioning measurement configuration according to the duration required by the UE to perform the first positioning measurement.

Here, the UE may pre-send auxiliary information to the network device for the network device to determine the positioning measurement configuration.

When the UE performs positioning measurement, it requires a certain duration from initiating the measurement to determining the position information. The positioning measurement configuration configured by the network device needs to meet the duration required by the UE to perform the first positioning measurement.

In an embodiment, the positioning measurement configuration needing to meet the duration required by the UE to perform the first positioning measurement may include, but is not limited to, at least one of the following:
the duration of the measurement period in the positioning measurement configuration needs to be greater than or equal to the duration required by the UE to perform the first positioning measurement;
the measurement duration of the first positioning measurement needs to be greater than or equal to the duration required by the UE to perform the first positioning measurement;
the sum of the time-domain offset value for the first positioning measurement within each measurement period and the duration required by the UE to perform the first positioning measurement is less than or equal to the duration of the measurement period.

In an embodiment, the UE determines the positioning measurement configuration based on a completed third positioning measurement, where the third positioning measurement is a positioning measurement completed before the first positioning measurement.

In an embodiment, the positioning measurement configuration may be pre-sent by the network device to the UE.

In an embodiment, the positioning measurement configuration may be determined by the UE based on the completed third positioning measurement.

In an embodiment, a first part of the positioning measurement configuration may be determined by the UE based on the completed third positioning measurement, and a second part of the positioning measurement configuration may be pre-sent by the network device to the UE.

For example, the measurement period in the positioning measurement configuration may be pre-sent by the network device to the UE, and the measurement duration in the positioning measurement configuration may be determined by the UE based on the completed third positioning measurement.

In an embodiment, the third positioning measurement may be a positioning measurement corresponding to the current positioning validity period.

In an embodiment, the third positioning measurement may be the last positioning measurement performed before the current first positioning measurement.

The UE may use the measurement configuration of the third positioning measurement as the configuration for the first positioning measurement.

For example, the UE may determine the time-domain offset value of the third positioning measurement as the time-domain offset value for the first positioning measurement.

In this way, by determining the positioning measurement configuration for the first positioning measurement based at least on the third positioning measurement, it is achieved that the UE can actively perform positioning measurement based on the positioning measurement configuration when the measurement trigger information is not received. On one hand, the flexibility of positioning measurement is improved. On the other hand, when the measurement trigger information is not received, the UE can actively determine position information through the positioning measurement configuration, thereby determining the timing compensation, improving communication reliability, effectively avoiding unnecessary service interruption of the UE, and reducing power consumption caused by service interruption and retries.

The first part of the positioning measurement configuration may include at least one of: the measurement period of the first positioning measurement; the time-domain offset value for the first positioning measurement within each measurement period; the measurement duration of the first positioning measurement; or the time-domain start position of the first positioning measurement.

The second part of the positioning measurement configuration may also include at least one of: the measurement period of the first positioning measurement; the time-domain offset value for the first positioning measurement within each measurement period; the measurement duration of the first positioning measurement; or the time-domain start position of the first positioning measurement.

The first part and the second part of the positioning measurement configuration may not overlap, or may overlap.

In an embodiment, the first part and the second part of the positioning measurement configuration may overlap, and the UE may select to use the first part or the second part according to their respective priorities.

In an embodiment, the UE determines an actual measurement duration of completing the third positioning measurement as the measurement duration of the first positioning measurement.

In an embodiment, the UE may determine the measurement duration of the first positioning measurement based on the actual measurement duration of the third positioning measurement. The actual measurement duration of the third positioning measurement may be the duration actually used by the UE to perform the third positioning measurement.

The UE may determine the actual measurement duration of the third positioning measurement as the measurement duration of the first positioning measurement.

The actual measurement duration of the third positioning measurement may be referred to as the position fix time of the third positioning measurement, such as the GNSS position fix time.

For example, the UE may perform the first positioning measurement based on the positioning measurement configuration configured by the network device. If the network device has not configured the positioning measurement configuration, or if the network device has not configured the measurement duration of the first positioning measurement in the measurement configuration, the UE may determine the measurement duration of the first positioning measurement as the position fix time of the most recent positioning measurement (i.e., the third positioning measurement), such as the GNSS position fix time of the third positioning measurement.

In an embodiment, the UE determines the time-domain start position of the first positioning measurement according to a positioning validity period associated with the third positioning measurement.

After the positioning validity period associated with the third positioning measurement expires, the position information of the UE obtained by performing the third positioning measurement becomes invalid, that is, the current timing compensation becomes invalid. Therefore, the UE may determine the time-domain start position of the first positioning measurement based on the positioning validity period associated with the third positioning measurement, to meet the time requirement for the UE to update the timing compensation.

For example, if the UE requires that the timing compensation needs to be continuous, then before the positioning validity period associated with the third positioning measurement expires, the UE needs to obtain an updated timing compensation after the expiration of the positioning validity period associated with the third positioning measurement. Therefore, the UE may perform the first positioning measurement before the positioning validity period associated with the third positioning measurement expires, that is, the time-domain start position of the first positioning measurement may be before the expiration of the positioning validity period associated with the third positioning measurement.

Determining the time-domain start position of the first positioning measurement based on the positioning validity period associated with the third positioning measurement can meet the requirement for updating the position information of the UE and meet the time requirement for updating the timing compensation.

In an embodiment, if the network device has not configured the positioning measurement configuration, or if the network device has not configured the time-domain start position of the first positioning measurement in the measurement configuration, the UE may determine the time-domain start position of the first positioning measurement according to the positioning validity period associated with the third positioning measurement.

In an embodiment, the UE determines an end time of the positioning validity period associated with the third positioning measurement as the time-domain start position of the first positioning measurement.

In an embodiment, if the network device has not configured the positioning measurement configuration, or if the network device has not configured the time-domain start position of the first positioning measurement in the measurement configuration, the UE may determine the end time of the positioning validity period associated with the third positioning measurement as the time-domain start position of the first positioning measurement.

As shown in FIG. 8, the time-domain start position of the first positioning measurement is the expiration position of the GNSS validity duration of the third positioning measurement. In FIG. 8, arrow A indicates the expiration time of the GNSS validity duration, and arrow B indicates the performed first positioning measurement.

In an embodiment, the UE determines the measurement period of the first positioning measurement according to a positioning validity period associated with the third positioning measurement.

In an embodiment, the period duration of the measurement period of the first positioning measurement is positively correlated with the duration of the positioning validity period associated with the third positioning measurement.

The longer the duration of the positioning validity period associated with the third positioning measurement, the lower the frequency of performing the first positioning measurement, that is, the longer the period duration of the measurement period of the first positioning measurement.

In an embodiment, the measurement period of the first positioning measurement changes according to the positioning validity period associated with the third positioning measurement.

As shown in FIG. 9, the measurement period of the first positioning measurement may change based on the GNSS validity duration of the third positioning measurement. When the GNSS validity duration of the UE changes, the terminal determines the measurement period for performing the first positioning measurement based on the latest GNSS validity duration. In FIG. 9, arrow A indicates the expiration time of the GNSS validity duration, and arrow B indicates the performed first positioning measurement.

In an embodiment, if the network device has not configured the positioning measurement configuration, or if the network device has not configured the measurement period of the first positioning measurement in the measurement configuration, the UE may determine the measurement period of the first positioning measurement according to the positioning validity period associated with the third positioning measurement.

The following provides multiple specific examples in combination with any of the above embodiments:

The terminal receives configuration signaling from the base station to determine a measurement configuration for performing autonomous GNSS measurement (i.e., the positioning measurement configuration). The terminal decides to perform the measurement configuration for autonomous GNSS measurement (i.e., the first positioning measurement) based on the measurement configuration of the base station.

The terminal determines the expiration time (i.e., the end time) of the current GNSS validity duration (i.e., the positioning validity period).

The terminal determines that it has not received a trigger command from the base station to trigger GNSS measurement within a predefined time before the expiration time of the current GNSS validity duration, and the terminal performs autonomous GNSS measurement. The terminal does not perform any uplink or downlink control or data interaction during the autonomous measurement time.

### Example 1:

The measurement configuration includes configurations for determining the GNSS measurement time, including but not limited to:
a measurement period, used for the terminal to determine the period of GNSS measurement;
a time-domain offset value, used to determine the measurement start time within each measurement period;
a GNSS measurement time (measurement duration), used to determine the time length of each GNSS measurement. If the base station does not configure this information, then the terminal considers that the GNSS measurement time is the GNSS position fix time of the most recent reported by the terminal (i.e., the actual measurement duration of the third positioning measurement).

### Example 2:

The measurement configuration includes configurations for determining the GNSS measurement time, including but not limited to:
a GNSS measurement time (measurement duration), used to determine the time length of each GNSS measurement.

If the base station does not configure the GNSS measurement time, then the terminal considers that the GNSS measurement time is the GNSS position fix time of the most recent reported by the terminal (i.e., the actual measurement duration of the third positioning measurement).

The terminal determines the time-domain start position of each GNSS measurement based on a predefined rule or received configuration information from the base station. The time-domain start position may be a configured position, or, as shown in FIG. 8, the time-domain start position is the expiration position of the current GNSS validity duration (i.e., the positioning validity period).

As shown in FIG. 9, the measurement period may change based on the GNSS validity duration. When the GNSS validity duration of the terminal changes, the terminal determines the measurement period for performing GNSS measurement based on the latest GNSS validity duration.

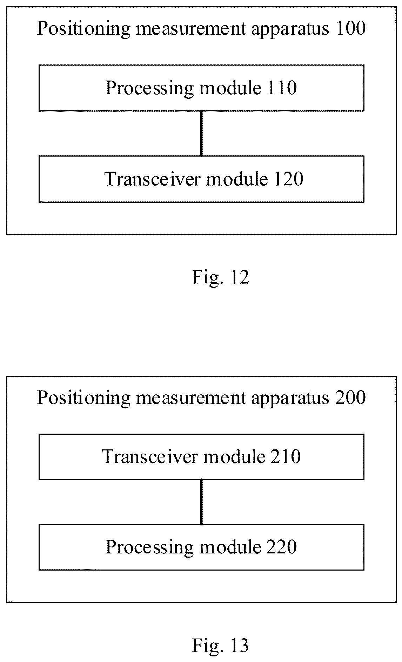

As shown in FIG. 12, an embodiment of the present disclosure provides a positioning measurement apparatus 100, arranged in a user equipment (UE), including:
a processing module 110, configured to determine that measurement trigger information sent by a network device is not received, and perform a first positioning measurement associated with a timing compensation according to a positioning measurement configuration, where the trigger information is used to trigger the UE to perform a second positioning measurement.

In an embodiment, the positioning measurement configuration includes at least one of:
a measurement period of the first positioning measurement;
a time-domain offset value for the first positioning measurement within each measurement period;
a measurement duration of the first positioning measurement; or
a time-domain start position of the first positioning measurement.

In an embodiment, the apparatus further includes:
a transceiver module 120, configured to receive the positioning measurement configuration sent by the network device.

In an embodiment, the transceiver module is further configured to send auxiliary information to the network device, where the auxiliary information at least indicates a duration required by the UE to perform the first positioning measurement, where the duration required by the UE to perform the first positioning measurement is used for the network device to determine the positioning measurement configuration.

In an embodiment, the processing module is further configured to determine the positioning measurement configuration based on a completed third positioning measurement, where the third positioning measurement is a positioning measurement completed before the first positioning measurement.

In an embodiment, the processing module is specifically configured to:
determine an actual measurement duration of completing the third positioning measurement as the measurement duration of the first positioning measurement.

In an embodiment, the processing module is specifically configured to:
determine the time-domain start position of the first positioning measurement according to a positioning validity period associated with the third positioning measurement.

In an embodiment, the processing module is specifically configured to:
determine an end time of the positioning validity period associated with the third positioning measurement as the time-domain start position of the first positioning measurement.

In an embodiment, the processing module is specifically configured to:
determine the measurement period of the first positioning measurement according to a positioning validity period associated with the third positioning measurement.

In an embodiment, the processing module is specifically configured to:
in response to not receiving the measurement trigger information sent by the network device within a predetermined duration before an end time of a current positioning validity period, perform the first positioning measurement associated with the timing compensation according to the positioning measurement configuration.

As shown in FIG. 13, an embodiment of the present disclosure provides a positioning measurement apparatus 200, arranged in a network device, including:
a transceiver module 210, configured to send a positioning measurement configuration to a user equipment (UE), where the positioning measurement configuration is used for the UE to determine that measurement trigger information sent by the network device is not received, and perform a first positioning measurement associated with a timing compensation, where the trigger information is used to trigger the UE to perform a second positioning measurement.

In an embodiment, the positioning measurement configuration includes at least one of:
a measurement period of the first positioning measurement;
a time-domain offset value for the first positioning measurement within each measurement period;
a measurement duration of the first positioning measurement; or
a time-domain start position of the first positioning measurement.

In an embodiment, the transceiver module is further configured to:
receive auxiliary information sent by the UE, where the auxiliary information at least indicates a duration required by the UE to perform the first positioning measurement;
the apparatus further includes a processing module 220, configured to determine the positioning measurement configuration according to the duration required by the UE to perform the first positioning measurement.

In an embodiment, the positioning measurement configuration is used for the UE to, in response to not receiving the measurement trigger information within a predetermined duration before an end time of a current positioning validity period, perform the first positioning measurement associated with the timing compensation.

According to a fifth aspect of the embodiments of the present disclosure, a communication system is provided, including: a user equipment (UE) and a network device, where
the user equipment (UE) is configured to perform the positioning measurement method according to the first aspect;
the network device is configured to perform the positioning measurement method according to the second aspect.

The embodiments of the present disclosure provide a communication device, including:
a processor;
a memory for storing processor-executable instructions;
where the processor is configured to: when running the executable instructions, implement the positioning measurement method according to any embodiment of the present disclosure.

In an embodiment, the communication device may include, but is not limited to, at least one of: a network control repeater and a network device. Here, the network device may include a core network or an access network device, etc. Here, the access network device may include a base station; the core network may include AMF, SMF.

The processor may include various types of storage media, which are non-transitory computer storage media, and can continue to store information thereon after the user equipment is powered off.

The processor may be connected to the memory via a bus, etc., to read the executable program stored in the memory, for example, at least one of the methods shown in FIGS. 4 to 7, 10, and 11.

The embodiments of the present disclosure also provide a computer storage medium, where the computer storage medium stores a computer-executable program, and when the executable program is executed by a processor, the positioning measurement method according to any embodiment of the present disclosure is implemented. For example, at least one of the methods shown in FIGS. 4 to 7, 10, and 11.

Regarding the apparatus or storage medium in the above embodiments, the specific ways in which the various modules perform operations have been described in detail in the embodiments related to the method, and will not be elaborated here.

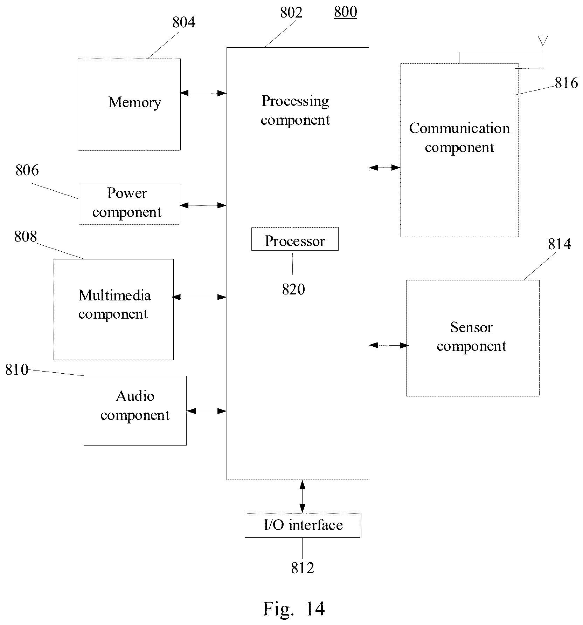

FIG. 14 is a block diagram of a UE 800 according to an embodiment. For example, the UE 800 may be a mobile phone, a computer, a digital broadcast user equipment, a messaging device, a game console, a tablet device, a medical device, a fitness device, a personal digital assistant, etc.

Referring to FIG. 14, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operations of the UE 800, such as operations associated with display, telephone calls, data communication, camera operations, and recording operations. The processing component 802 may include one or more processors 820 to execute instructions to perform all or part of the steps of the above method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations in the UE 800. Examples of such data include instructions for any application or method operating on the UE 800, contact data, phonebook data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

In an embodiment, the UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, for performing the above method.

In an embodiment, there is also provided a non-transitory computer-readable storage medium including instructions, such as the memory 804 including instructions, which can be executed by the processor 820 of the UE 800 to perform the above method. For example, the non-transitory computer-readable storage medium may be ROM, random access memory (RAM), CD-ROM, magnetic tape, floppy disk, and optical data storage device, etc.

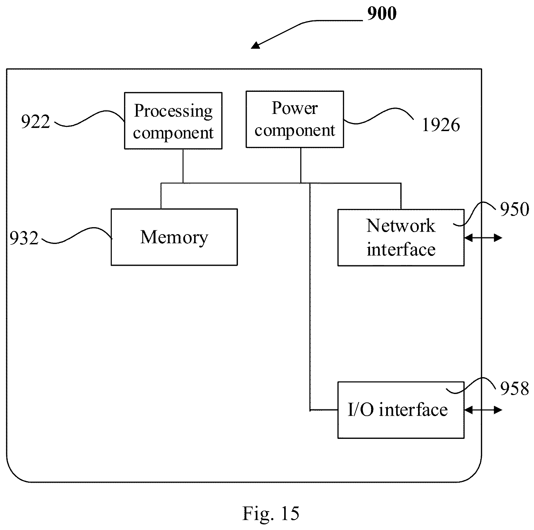

As shown in FIG. 15, an embodiment of the present disclosure shows a structure of an access device. For example, the communication device 900 may be provided as a network device. The communication device may be the aforementioned access network element and/or network function and other various network elements.

Referring to FIG. 15, the communication device 900 includes a processing component 922, which further includes one or more processors, and a memory resource represented by a memory 932, for storing instructions executable by the processing component 922, such as applications. The applications stored in the memory 932 may include one or more modules, each corresponding to a set of instructions. Moreover, the processing component 922 is configured to execute instructions to perform the aforementioned method applied to the access device, for example, any method shown in FIGS. 4 to 7, 10, and 11.

Without contradiction, each step in the above-mentioned implementation or embodiment can be implemented as an independent embodiment, and the steps can be combined arbitrarily. For example, the solution after removing some steps in a certain implementation or embodiment can also be implemented as an independent embodiment, and the order of the steps in a certain implementation or embodiment can be arbitrarily exchanged. In addition, the optional methods or examples in a certain implementation or embodiment can be arbitrarily combined; moreover, the implementations or embodiments can be arbitrarily combined. For example, part or all of the steps of different implementations or embodiments can be arbitrarily combined, and the optional methods or examples of one implementation or embodiment can be arbitrarily combined with other implementations or embodiments.

Those skilled in the art, after considering the specification and practicing the invention disclosed herein, will easily think of other implementations of the present invention. The present disclosure is intended to cover any variations, uses, or adaptive changes of the present invention. These variations, uses, or adaptive changes follow the general principles of the present invention and include common knowledge or conventional technical means in the technical field not disclosed in the present disclosure. The specification and examples are considered exemplary only, and the true scope and spirit of the present invention are indicated by the following claims.

It should be understood that the present invention is not limited to the precise structure that has been described above and shown in the drawings, and various modifications and changes can be made without departing from the scope thereof. The scope of the present invention is only limited by the appended claims.

## Claims

1. A positioning measurement method, performed by a user equipment (UE), comprising:
determining that measurement trigger information sent by a network device is not received, and performing a first positioning measurement associated with a timing compensation according to a positioning measurement configuration, wherein the measurement trigger information is used to trigger the UE to perform a second positioning measurement.

2. The method according to claim 1, wherein the positioning measurement configuration comprises at least one of:
a measurement period of the first positioning measurement;
a time-domain offset value for the first positioning measurement within each measurement period;
a measurement duration of the first positioning measurement; or
a time-domain start position of the first positioning measurement.

3. The method according to claim 2, further comprising:
receiving the positioning measurement configuration sent by the network device.

4. The method according to claim 3, further comprising:
sending auxiliary information to the network device, wherein the auxiliary information at least indicates a duration required by the UE to perform the first positioning measurement, and the duration required by the UE to perform the first positioning measurement is used for the network device to determine the positioning measurement configuration.

5. The method according to any one of claims 2 to 4, further comprising:
determining the positioning measurement configuration based on a third positioning measurement completed, wherein the third positioning measurement is completed before the first positioning measurement.

6. The method according to claim 5, wherein determining the positioning measurement configuration based on the third positioning measurement completed comprises:
determining an actual measurement duration of completing the third positioning measurement as the measurement duration of the first positioning measurement.

7. The method according to claim 5, wherein determining the positioning measurement configuration based on the third positioning measurement completed comprises:
determining the time-domain start position of the first positioning measurement according to a positioning validity period associated with the third positioning measurement.

8. The method according to claim 7, wherein determining the time-domain start position of the first positioning measurement according to the positioning validity period associated with the third positioning measurement comprises:
determining an end time of the positioning validity period associated with the third positioning measurement as the time-domain start position of the first positioning measurement.

9. The method according to claim 5, wherein determining the positioning measurement configuration based on the third positioning measurement completed comprises:
determining the measurement period of the first positioning measurement according to a positioning validity period associated with the third positioning measurement.

10. The method according to any one of claims 1 to 9, wherein determining that the measurement trigger information sent by the network device is not received and performing the first positioning measurement associated with the timing compensation according to the positioning measurement configuration comprises:
in response to not receiving the measurement trigger information sent by the network device within a predetermined duration before an end time of a current positioning validity period, performing the first positioning measurement associated with the timing compensation according to the positioning measurement configuration.

11. A positioning measurement method, performed by a network device, comprising:
sending a positioning measurement configuration to a user equipment (UE), wherein the positioning measurement configuration is used for the UE to determine that measurement trigger information sent by the network device is not received and perform a first positioning measurement associated with a timing compensation, wherein the measurement trigger information is used to trigger the UE to perform a second positioning measurement.

12. The method according to claim 11, wherein the positioning measurement configuration comprises at least one of:
a measurement period of the first positioning measurement;
a time-domain offset value for the first positioning measurement within each measurement period;
a measurement duration of the first positioning measurement; or
a time-domain start position of the first positioning measurement.

13. The method according to claim 11 or 12, further comprising:
receiving auxiliary information sent by the UE, wherein the auxiliary information at least indicates a duration required by the UE to perform the first positioning measurement;
determining the positioning measurement configuration according to the duration required by the UE to perform the first positioning measurement.

14. The method according to any one of claims 11 to 13, wherein the positioning measurement configuration is used for the UE to, in response to not receiving the measurement trigger information within a predetermined duration before an end time of a current positioning validity period, perform the first positioning measurement associated with the timing compensation.

15. A positioning measurement apparatus, arranged in a user equipment (UE), comprising:
a processing module configured to determine that measurement trigger information sent by a network device is not received, and perform a first positioning measurement associated with a timing compensation according to a positioning measurement configuration, wherein the measurement trigger information is used to trigger the UE to perform a second positioning measurement.

16. A positioning measurement apparatus, arranged in a network device, comprising:
a transceiver module, configured to send a positioning measurement configuration to a user equipment (UE), wherein the positioning measurement configuration is used for the UE to determine that measurement trigger information sent by the network device is not received and perform a first positioning measurement associated with a timing compensation, wherein the measurement trigger information is used to trigger the UE to perform a second positioning measurement.

17. A communication system, comprising a user equipment (UE) and a network device, wherein
the user equipment (UE) is configured to perform the positioning measurement method according to any one of claims 1 to 10; and
the network device is configured to perform the positioning measurement method according to any one of claims 11 to 14.

18. A communication device, comprising a processor, a transceiver, a memory, and an executable program stored in the memory and executable by the processor, wherein the processor, when executing the executable program, performs the positioning measurement method according to any one of claims 1 to 10 and 11 to 14.

19. A computer storage medium, having stored therein an executable program that, when executed, causes the positioning measurement method according to any one of claims 1 to 10 and 11 to 14 to be implemented.
